# EUROPÄISCHE PATENTSCHRIFT

(11) **EP 2 655 950 B1**
(45) Veröffentlichungstag und Bekanntmachung des Hinweises auf die Patenterteilung: **09.03.2016**
(21) Anmeldenummer: 11807669.4
(22) Anmeldetag: 16.12.2011
(51) Int. Cl.: F01N 3/20, F16L 53/00

(54) **KONFEKTIONIERTE MEDIENLEITUNG SOWIE VERWENDUNG IN EINEM SCR-KATALYSATOR-SYSTEM**
FABRICATED MEDIA LINE AND USE IN AN SCR CATALYST SYSTEM
CONDUITE ASSEMBLÉE POUR AGENTS FLUIDIQUES ET UTILISATION DE LADITE CONDUITE DANS UN SYSTÈME CATALYSEUR SCR

(30) Priorität: 22.12.2010 DE 102010055520
(43) Veröffentlichungstag der Anmeldung: 30.10.2013
(73) Patentinhaber: Voss Automotive GmbH, 51688 Wipperfürth (DE)
(72) Erfinder: PLIETSCH, Reinhard, 42929 Wermelskirchen (DE); ETSCHEID, Tobias, 51789 Lindlar (DE); ISENBURG, Marco, 40885 Ratingen (DE); PREISS, Oliver, 40882 Ratingen (DE); SACHSE, Martin, 51688 Wipperfürth (DE); SCHWARZKOPF, Otfried, 51515 Kürten (DE)
(74) Vertreter: Patentanwälte Dr. Solf & Zapf
(86) Internationale Anmeldenummer: PCT/EP2011/073080
(87) Internationale Veröffentlichungsnummer: WO 2012/084721

(56) Entgegenhaltungen:
- EP-A1- 0 764 810
- WO-A1-2007/032034
- WO-A1-2009/080501
- WO-A2-2008/005829
- DE-A1-102006 017 399
- DE-U1-202009 006 902

## Beschreibung

Die vorliegende Erfindung betrifft eine konfektionierte Medienleitung zum Durchleiten von fluidischen Medien mit einer Fluidleitung mit endseitigen Leitungsverbindern, insbesondere zum Verbinden eines Tanks mit einer Dosiereinheit für ein Reduktionsadditiv in einem SCR-Katalysator-System eines Verbrennungsmotors, wobei die Fluidleitung mindestens abschnittsweise elektrische Heizmittel zur Fluidbeheizung aufweist, wobei die Fluidleitung zumindest bereichsweise Temperiermittel zur fluidischen Temperierung mittels eines Temperierfluids mit mindestens einem Übergang zu einer externen Zuführleitung und/oder einer externen Abführleitung für das Temperierfluid aufweist, wobei die Temperiermittel von mindestens einer Temperierleitung gebildet sind, und die/jede Temperierleitung über einen bestimmten Längenabschnitt hinweg benachbart zu der Fluidleitung verläuft.

Ferner betrifft die Erfindung auch die Verwendung einer solchen Medienleitung zum Verbinden eines Tanks mit einer Dosiereinheit für ein Reduktionsadditiv, insbesondere eine wässrige Harnstofflösung in einem SCR-Katalysator-System eines Verbrennungsmotors.

Derartige konfektionierte Medienleitungen mit elektrischen Heizmitteln zur Fluidbeheizung sind bekannt; lediglich beispielhaft sei hier auf das Dokument WO 2008/131993 A1 verwiesen. Durch die elektrischen Heizmittel der Fluidleitung und der endseitigen Leitungsverbinder wird bei niedrigen Umgebungstemperaturen ein Einfrieren des jeweiligen Mediums vermieden, und/oder das gegebenenfalls bereits gefrorene Medium kann durch Wärmezufuhr aufgetaut werden. Auch diese bekannte Medienleitung wird bevorzugt für eine Harnstofflösung verwendet, die als NOₓ-Reduktionsadditiv für Dieselmotoren mit so genannten SCR-Katalysatoren eingesetzt wird.

Speziell bei dieser bevorzugten Verwendung solcher Medienleitungen besteht das Problem, dass die mit einem Tank oder einer Pumpe zu verbindende SCR-Dosiereinheit aufgrund der Anordnung an einem Abgasstrang des Verbrennungsmotors im Betrieb sehr hohen Temperaturen ausgesetzt ist, was zum Teil auch für den mit der Dosiereinheit verbundenen Bereich der Medienleitung und deren Leitungsverbinder gilt. In der heutigen Motorentechnik und speziell bei Einsatz von SCR-Katalysatoren besteht die Tendenz, das Reduktionsadditiv in immer näher am Motor liegenden Bereichen des Abgasstrangs einzubringen. So wird beispielsweise bei Verwendung eines mit einem Dieselpartikelfilter zu einer Komponente bzw. Baueinheit kombinierten SCR-Katalysators das Reduktionsadditiv bereits hinter einem Oxidationskatalysator eingeführt. Dies führt dazu, dass die Dosiereinheit immer höheren Temperaturen ausgesetzt wird, was entsprechend auch für die angeschlossene Medienleitung und den Leitungsverbinder gilt.

Die WO 2008/005829 A2 beschreibt ein Polymerrohr, das mindestens eine Polymerschicht mit einer ihm zugeordneten Heizeinrichtung umfasst. Die Heizeinrichtung kann zumindest eine aus einer leitfähigen Polymerschicht, einem in der Polymerschicht eingebetten Heizelement oder einem Heizmantel gebildet sein. Zudem wird eine Vorrichtung zum Fördern eines erwärmten Fluids mittels einer Rohr-in-Rohr-Leitung beschrieben, wobei durch das Außenrohr ein Temperiermedium zum Erwärmen des in dem Innenrohr fließenden Fluids verwendet wird.

Die DE 20 2009 006 902 U1 beschreibt eine Transportleitung zum Transport von viskosen oder flüssigen Materialien wie zum Beispiel Klebstoffen, Gießharzen oder Grundstoffen für die Kosmetik- oder Lebensmittelindustrie durch Schläuche. Dabei soll das Eindiffundieren von Luft und Feuchtigkeit in die flüssigen Materialien durch eine Ummantelung eines Schlauchs oder mehrerer Schläuche mittels eines möglichst luftdichten Außengehäuses verhindert werden. Dabei kann zum Temperieren der flüssigen Materialien auch ein Temperiermedium durch das Außengehäuse fließen.

Die DE 10 2006 17 399 beschreibt eine Vorrichtung zur Abgasnachbehandlung durch Einbringen eines flüssigen Reduktionsmittels in das Abgas der Brennkraftmaschine. Die Vorrichtung weist Reduktionsmittel führende Schlauchleitungen auf, die paarig in enger Nachbarschaft mit Heizwasser führenden Schlauchleitungen angeordnet sind. Mindestens ein Schlauchleitungspaar endet mit mindestens einem Ende gemeinsam an einem einen Einsteckverbinder aufweisenden Anschlussblock. Das Reduktionsmittel wird von dem Anschlussblock in das Innere des zu verbindenden Aggregats, und das Heizwasser wird durch einen Durchflusskanal, der außerhalb des Aggregates einen Auslass aufweist, geführt.

Die EP 0 764 810 A1 beschreibt ein System für die Temperierung von durch Prozessrohren fließenden chemischen Prozessfluida einer chemischen Fertigungsanlage. Dabei wird das Prozessrohr von einer Verkleidung umgeben, die wiederum mehrere Rohre mit einem Temperierungsmittel aufweist.

Die WO 2007/032034 A1 beschreibt eine Rohrverbindung für eine beheizbare Rohrleitung eines SCR-Systems, wobei die Rohrverbindung sowohl eine hydraulische Verbindung für die Strömung des Reduktionsmittels als auch eine elektrische Verbindung für ein elektrisches Heizelement der Rohrleitung ermöglicht.

Die WO 2009/080501 A1 beschreibt einen Leitungsverbinder für Medienleitungen und eine vorgefertigte Medienleitung, umfassend einen Fluidverbinder mit wenigstens einem Verbindungsabschnitt zur Anschlussverbindung mit einer Fluidleitung und einem Übergangsabschnitt mit einem inneren Flüssigkeitskanal und elektrische Heizmittel zum erwärmen der Flüssigkeit in dem Flüssigkeitskanal. Der Fluidverbinder ist durch Kapselung zumindest im Bereich der Heizmittel ummantelt. Die Kapselung hat eine Abzweigung zu einem elektrischen Versorgungsleiter für die Heizmittel.

Der vorliegenden Erfindung liegt die Aufgabe zu Grunde, eine konfektionierte Medienleitung der beschriebenen, gattungsgemäßen Art so zu verbessern, dass sie sich besonders für die beschriebene Verwendung zur Anschlussverbindung mit einer SCR-Katalysator-Dosiereinheit eignet.

Erfindungsgemäß wird dies gemäß dem unabhängigen Anspruch 1 dadurch erreicht, dass die Fluidleitung zumindest bereichsweise, insbesondere in einem einendigen ersten Anschlussbereich, Temperiermittel zur fluidischen Temperierung einer über den Anschlussbereich angeschlossenen bzw. anzuschließenden Komponente mittels eines Temperierfluids mit mindestens einem Übergang zu einer externen Zuführ- und/oder Abführleitung für das Temperierfluid aufweist. Bei der bevorzugten Verwendung dient das Temperierfluid zur Kühlung der über den Anschlussbereich anzuschließenden Komponente, insbesondere einer SCR-Dosiereinheit, wobei die vom Abgasstrang mittelbar über die Dosiereinheit oder auch direkt vom Abgasstrang kommende Wärme effektiv über das Temperierfluid abgeführt wird. Dabei wird als Temperierfluid insbesondere Kühlflüssigkeit des Verbrennungsmotors verwendet.

Weitere vorteilhafte Ausgestaltungsmerkmale der Erfindung sind in den abhängigen Ansprüchen und in der anschließenden Beschreibung enthalten.

Anhand der Zeichnungen und darin veranschaulichter, bevorzugter Ausführungs- und Anwendungsbeispiele soll die Erfindung genauer erläutert werden. Dabei zeigen:
- Fig. 1: eine schematische Seitenansicht einer erfindungsgemäßen Medienleitung in einer ersten Ausführung mit einer angeschlossenen Dosiereinheit,
- Fig. 2: eine vergrößerte, teilweise geschnittene Ansicht im ersten Anschlussbereich der erfindungsgemäßen Medienleitung mit getrennt dargestellter Dosiereinheit,
- Fig. 3: eine Ausführungsvariante der erfindungsgemäßen Medienleitung,
- Fig. 4: ein Teilstück der Medienleitung,
- Fig. 5: einen Querschnitt in der Ebene V-V gemäß Fig. 4,
- Fig. 6: eine stark schematische Darstellung der Medienleitung in einer bevorzugten Verwendung,
- Fig. 7: eine Darstellung analog zu Fig. 6 in einer Ausführungsvariante,
- Fig. 8: eine Perspektivansicht eines Anschlussgehäuses in einem geöffneten Zustand,
- Fig. 9: eine alternative Ausgestaltung zu Fig. 8,
- Fig. 10: ein vereinfachtes, schematisches Blockschaltbild eines Verbrennungsmotors mit SCR-Katalysator als bevorzugte Verwendung einer erfindungsgemäßen Medienleitung,
- Fig. 11: einen Ausschnitt aus Fig. 10 in einer Ausführungsvariante der erfindungsgemäßen Medienleitung,
- Fig. 12: eine weitere Ausführungsvariante der erfindungsgemäßen Medienleitung in einer schematischen Darstellung ähnlich Fig. 11,
- Fig. 13: eine Perspektivansicht eines Ausschnittes der Medienleitung in einem Ausführungsbeispiel für die Ausführung gemäß Fig. 12 und
- Fig. 14: eine Ansicht wie in Fig. 13 in einer weiteren Ausgestaltung.

In den verschiedenen Figuren der Zeichnung sind gleiche Teile stets mit den gleichen Bezugszeichen versehen.

Zu der anschließenden Beschreibung wird ausdrücklich betont, dass die Erfindung nicht auf die Ausführungsbeispiele und dabei nicht auf alle oder mehrere Merkmale von beschriebenen Merkmalskombinationen beschränkt ist, vielmehr kann jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels sowie auch unabhängig von den Ansprüchen und deren Rückbeziehungen eine erfinderische Bedeutung haben.

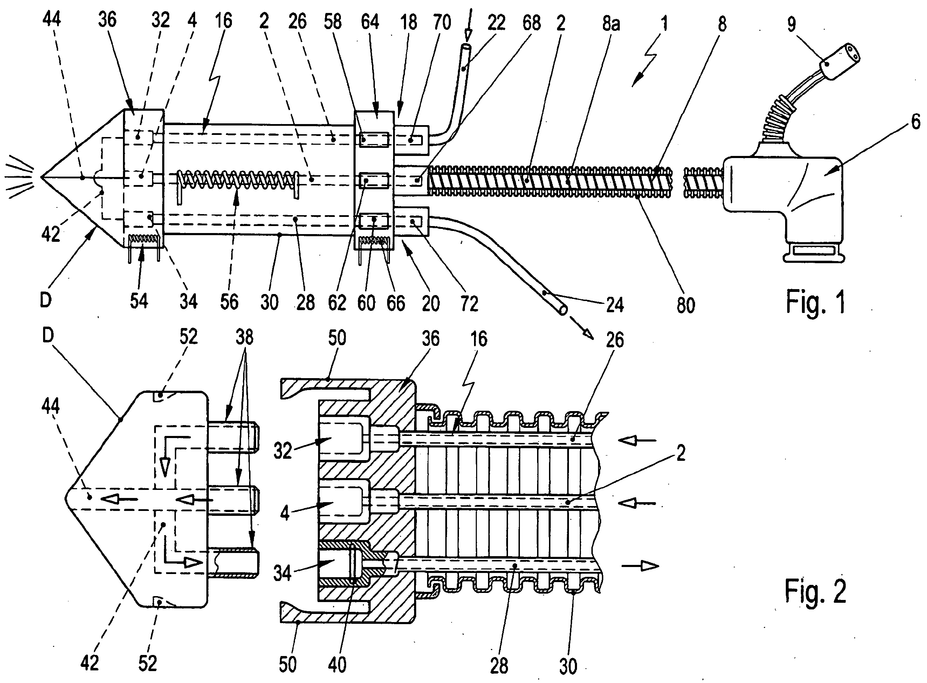

Eine erfindungsgemäße konfektionierte Medienleitung 1 besteht aus einer Fluidleitung 2 in Form einer Schlauch- oder Rohrleitung insbesondere aus Kunststoff mit endseitigen Leitungsverbindern 4, 6, die bevorzugt als Fluid-Steckverbinderteile, und zwar als Stecker oder Steckeraufnahmen, d. h. Muffen, ausgebildet sind. Die Fluidleitung 2 weist zumindest abschnittsweise elektrische Heizmittel 8 zur Fluidbeheizung auf. Zudem ist bevorzugt vorgesehen, dass zumindest einer der beiden Leitungsverbinder 4, 6, und zwar insbesondere der Leitungsverbinder 6, elektrisch beheizbar ist. Optional kann auch der andere Leitungsverbinder 4 elektrisch beheizbar sein. Die Heizmittel 8 der Fluidleitung 2 bestehen bevorzugt aus mindestens einer insbesondere schraubenlinienförmig über die Länge hinweg verlaufenden Bewicklung aus einem geeigneten Heizleiter 8a aus Widerstandsdraht. Zumindest der zweite, in Fig. 1 rechts dargestellte Leitungsverbinder 6 ist ebenfalls mit - in der Darstellung nicht erkennbaren - elektrischen Heizmitteln zur Fluidbeheizung ausgestattet, und er kann abgezweigte elektrische Anschlussleiter mit einem Verbindungsstecker 9 zum Anschluss einer elektrischen Spannungsquelle oder zur Verbindung mit weiteren Heizmitteln, z. B. einer weiteren Medienleitung, aufweisen.

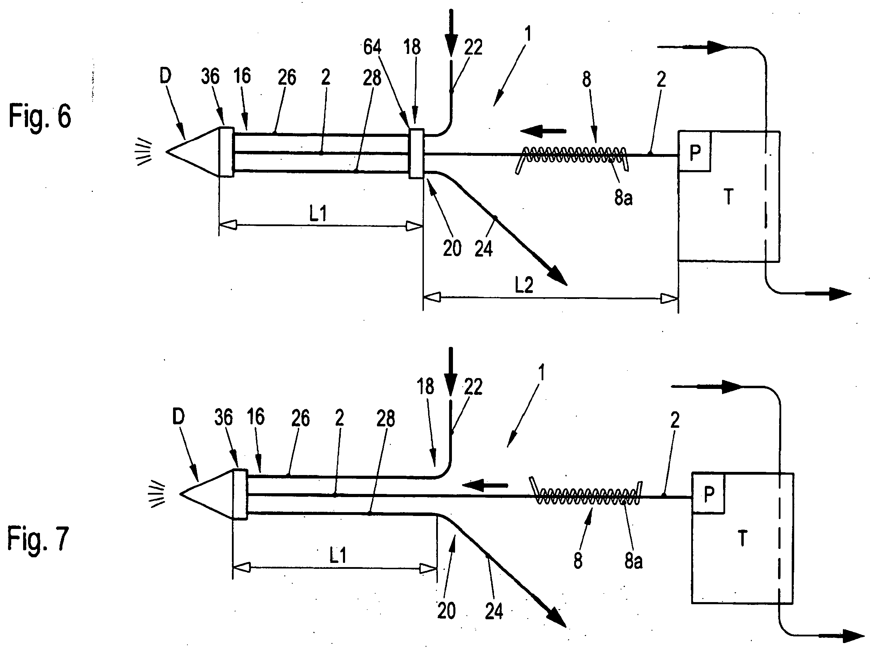

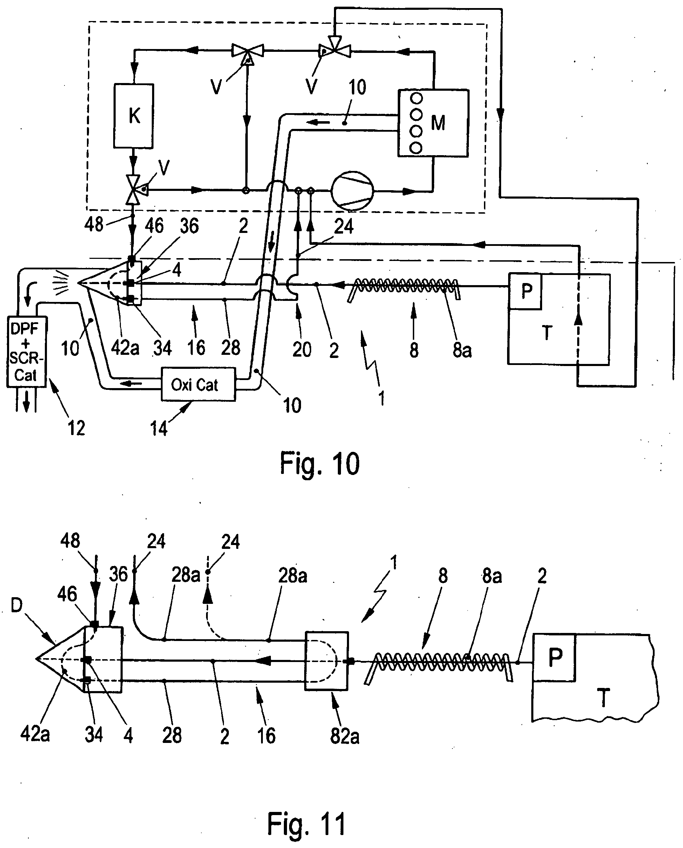

Gemäß Fig. 6, 7 und 10 dient die Medienleitung 1 bevorzugt zum fluidischen Verbinden eines Tanks T bzw. einer dort angeordneten Pumpe P mit einer Dosiereinheit D für ein fluidisches Reduktionsadditiv, insbesondere eine wässrige Harnstofflösung, in einem SCR-Katalysator-System eines Verbrennungsmotors M. Die Abkürzung SCR bedeutet "selective catalytic reduction" bzw. selektive katalytische Reduktion. Gemäß Fig. 10 ist die Dosiereinheit D an einem Abgasstrang 10 des Motors M angeordnet, um das Reduktionsadditiv in den Abgasstrom einzuführen, und zwar im Bereich vor einem SCR-Katalysator 12 und hinter einem Oxidationskatalysator 14. Bevorzugt ist der SCR-Katalysator 12 mit einem Dieselpartikelfilter DPF zu einer Baueinheit kombiniert. In diesem relativ nah am Motor liegenden Bereich des Abgasstrangs 10 treten recht hohe Temperaturen auf, so dass die angeschlossene Medienleitung 1 in ihrem mit der Dosiereinheit D verbundenen Anschlussbereich für eine Dauer-Betriebstemperatur von 120° bis 140° C und kurzzeitig für z. B. bis zu 15 Minuten für eine Temperatur von bis zu 220° C ausgelegt sein muss.

Erfindungsgemäß ist dazu vorgesehen, dass die Medienleitung 1 wenigstens bereichsweise, zumindest in einem einendigen Anschlussbereich der Fluidleitung 2, Temperiermittel 16 zur fluidischen Temperierung, insbesondere Kühlung, mittels eines Temperierfluids mit mindestens einem Übergang 18 bzw. 20 zu einer externen Zuführleitung 22 und/oder einer externen Abführleitung 24 für das Temperierfluid aufweist.

In den dargestellten, bevorzugten Ausführungen sind die Temperiermittel 16 von mindestens einer Temperierleitung 26 oder 28, insbesondere aber von zwei Temperierleitungen 26 und 28 gebildet, wobei die eine Temperierleitung 26 einen Vorlauf und die andere Temperierleitung 28 einen Rücklauf für das Temperiermittel bildet. Jede Temperierleitung 26, 28 verläuft über einen bestimmten Längenabschnitt hinweg benachbart zu der Fluidleitung 2. In den dargestellten Ausführungen handelt es sich um einzelne, eng benachbart verlaufende Leitungen, es ist aber auch denkbar, dass die zwei bis drei Leitungen fest, z. B. stoffschlüssig oder als einteilige Mehrfachleitung miteinander verbunden sind. Über den jeweiligen bestimmten Längenabschnitt hinweg ist die bzw. jede Temperierleitung 26, 28 gemeinsam mit der Fluidleitung 2 vorzugsweise von einer Leitungsumhüllung 30 umschlossen. In diesem Bereich ergibt sich folglich ein Leitungsbündel aus zwei bis drei einzelnen oder verbundenen Leitungen.

In weiterer bevorzugter Ausgestaltung der Erfindung weist jede Temperierleitung 26, 28 in dem den ersten Leitungsverbinder 4 aufweisenden ersten Anschlussbereich der Fluidleitung 2 ebenfalls einen Leitungsverbinder 32 bzw. 34 auf. Hierbei ist es weiterhin vorteilhaft, wenn die Leitungsverbinder 32, 34 der Temperierleitungen 26, 28 gemeinsam mit dem ersten Leitungsverbinder 4 der Fluidleitung 2 als Mehrfachverbinder 36 insbesondere zur gemeinsamen Anschluss-Steckverbindung mit der Dosiereinheit D ausgebildet sind. Vorzugsweise ist der Mehrfachverbinder 36 plattenförmig als "Mehrfachkupplungsplatte" ausgebildet, wobei gemäß Fig. 2 jeder Leitungsverbinder 4, 32, 34 als Teil einer Fluid-Steckverbindung, wie dargestellt bevorzugt als Aufnahmemuffe für jeweils einen Steckeransatz 38 der Dosiereinheit D ausgebildet ist. Zur umfangsgemäßen Abdichtung jeder Steckverbindung ist ein Dichtring 40 vorgesehen, der gemäß Fig. 2 beispielhaft innerhalb der Aufnahmemuffe angeordnet ist, alternativ aber auch am Umfang des jeweiligen Steckeransatzes 38 angeordnet sein kann.

Bei den bevorzugten Ausführungen mit zwei Temperierleitungen 26 und 28 sind diese gemäß Fig. 1 und 2 über ihre Leitungsverbinder 32, 34 und über einen durch die Dosiereinheit D verlaufenden Verbindungskanal 42 miteinander verbunden oder verbindbar. Somit wird bei dieser Ausführung das Temperierfluid auch durch die Dosiereinheit D geleitet, so dass die Dosiereinheit D ebenfalls temperiert, insbesondere gekühlt wird.

Die Fluidleitung 2 ist über ihren Leitungsverbinder 4 mit einem Dosierkanal 44 der Dosiereinheit D verbunden bzw. verbindbar. Das über die Fluidleitung 2 zugeführte Reduktionsadditiv kann somit über den Dosierkanal 44 in den Abgasstrang 10 eingedüst werden; vgl. Fig. 10.

Bei der in Fig. 10 beispielhaft veranschaulichten Ausführung mit nur einer Temperierleitung, wie dargestellt beispielsweise der Temperierleitung 28, weist der Mehrfachverbinder 36 zweckmäßig einen Anschlussverbinder 46 zum direkten Anschluss einer Zu- oder Abführleitung, im dargestellten Beispiel einer Zuführleitung 48, für das Temperierfluid auf. Der plattenförmige Mehrfachverbinder 36 weist dann im Verbindungsbereich mit der Dosiereinheit D nur den Leitungsverbinder 4 für die Fluidleitung 2 und einen Leitungsverbinder für die Temperierleitung, z. B. 28, auf. Dabei ist der Leitungsverbinder der Temperierleitung 28 mit dem Anschlussverbinder 46 über einen Verbindungskanal 42ä der Dosiereinheit D verbunden oder verbindbar.

Wie sich weiter aus Fig. 2 ergibt, ist der bevorzugt vorgesehene Mehrfachverbinder 36 mit der Dosiereinheit D verrastet oder verrastbar. Dazu kann der als Kunststoff-Formteil ausgebildete Mehrfachverbinder 36 federelastische Rastarme 50 aufweisen, die mit endseitigen Rastnasen in Rastausnehmungen 52 der Dosiereinheit D einrasten, wenn die Steckverbindungen zusammengesteckt sind.

Wie weiterhin in Fig. 1 angedeutet ist, kann der Mehrfachverbinder 36 optional zusätzliche elektrische Heizmittel 54 zur Fluidbeheizung aufweisen. Dadurch kann in bestimmten Betriebszuständen nach Bedarf eine Beheizung des Fluids erfolgen, insbesondere nach längerem Stillstand bei niedrigen Umgebungstemperaturen.

Ähnliches gilt auch für die Fluidleitung 2 in ihrem die fluidischen Temperiermittel 16 aufweisenden Längenbereich. Auch hier kann die Fluidleitung 2 zusätzlich mit bedarfsweise ansteuerbaren elektrischen Heizmitteln 56 ausgestattet sein.

Die bzw. jede Temperierleitung 26, 28 weist im Bereich ihres vom ersten Anschlussbereich und dem bevorzugten Mehrfachverbinder 36 beabstandeten Übergangs 18, 20 ebenfalls einen Leitungsverbinder 58, 60 zum lösbaren Anschluss der externen Zuführleitung 22 bzw. der externen Abführleitung 24 auf. Diese Leitungsverbinder 58, 60 sind - bevorzugt gemeinsam mit einem die Fluidleitung 2 in zwei Abschnitte unterteilenden Fluidverbinder 62 - als Mehrfachverbinder 64 ausgebildet. Dieser Mehrfachverbinder 64 kann entsprechend dem oben beschriebenen Mehrfachverbinder 36 ausgebildet sein, d. h. ebenfalls als plattenförmige "Mehrfachkupplungsplatte". Zudem weist auch dieser Mehrfachverbinder 64 zusätzliche elektrische Heizmittel 66 auf.

Wie sich weiterhin aus Fig. 1 ergibt, weist die Fluidleitung 2 bei dieser geteilten Ausführung zur Steckverbindung mit dem Fluidverbinder 62 ein Steckverbinderteil 68 auf. Entsprechend weisen auch die externen Zu- und Abführleitungen 22, 24 für das Temperierfluid jeweils ein Steckverbinderteil 70 bzw. 72 zur Anschlusssteckverbindung mit dem korrespondierenden Leitungsverbinder 58 bzw. 60 auf.

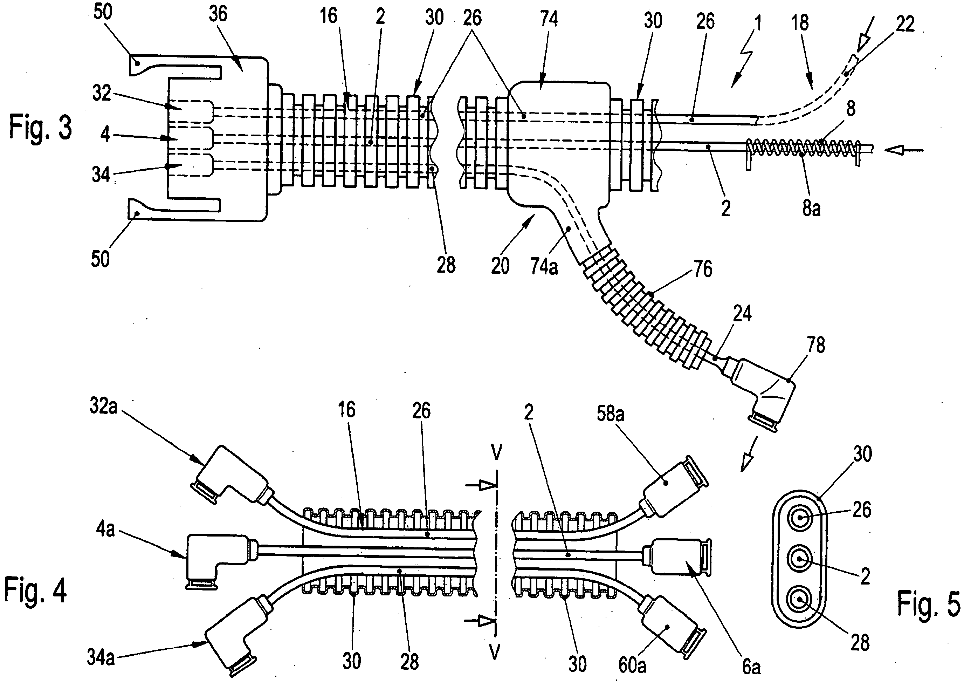

Alternativ zu dieser bevorzugten, bisher beschriebenen Ausführung ist in den Figuren 3 und 7 angedeutet, dass jede Temperierleitung 26, 28 im Bereich ihres vom ersten Anschlussbereich beabstandeten Übergangs 18 bzw. 20 durchlaufend in die Zuführleitung 22 bzw. die Abführleitung 24 übergeht. Dazu kann die durchlaufende Leitung über ein beispielhaft in Fig. 3 veranschaulichtes Abzweigstück 74 der Leitungsumhüllung 30 geführt und vereinzelt werden. In diesem Fall kann auch die Fluidleitung 2 ohne Unterbrechung durchlaufen. Bevorzugt ist auch jede abgezweigte Leitung von einer Leitungsumhüllung 76 umgeben, wie sie beispielhaft in Fig. 3 für die Abführleitung 24 dargestellt ist. Die Leitungen 22 und 24 weisen endseitig jeweils einen Leitungsverbinder 78 auf, wie er in Fig. 3 ebenfalls nur für die Abführleitung 24 dargestellt ist. Auch die Fluidleitung 2 weist in dem Längenabschnitt zwischen den Temperiermitteln 16 und dem endseitigen Leitungsverbinder 6 eine Leitungsumhüllung 80 auf; vgl. die Darstellung in Fig. 1.

Gemäß Fig. 2 und 3 ist die Leitungsumhüllung 30 bevorzugt von einem Wellrohr gebildet und einendig mit dem bevorzugten Mehrfachverbinder 36 und anderendig mit dem Mehrfachverbinder 64 oder mit dem Abzweigstück 74 (Fig. 3) formschlüssig verbunden, beispielsweise verrastet. Entsprechendes gilt auch für die Leitungsumhüllung 76 gemäß Fig. 3 im Bereich ihrer Verbindung mit einem Abzweig 74a des Abzweigstückes 74.

In Fig. 4 ist noch beispielhaft ein Leitungsstück der Medienleitung 1 veranschaulicht, welches aus einem Teil der Fluidleitung 2 sowie zumindest Teilstücken der Temperierleitungen 26, 28 besteht. Jede Leitung ist beidendig mit einem einzelnen Leitungsverbinder ausgestattet. Unter Berücksichtigung der Ausführung gemäß Fig. 1 sind die Leitungsverbinder der Fluidleitung 2 mit den Bezugszeichen 4a und 6a bezeichnet und die Leitungsverbinder der Temperierleitungen mit 32a, 34a und 58a, 60a. Die Leitungen sind auch hier von einer Leitungsumhüllung 30 umschlossen. Gemäß Fig. 5 kann diese einen ovalen Querschnitt aufweisen. Alternativ zu den einzelnen Leitungsverbindern kann aber auch zumindest einendig ein gemeinsamer Mehrfachverbinder vorgesehen sein.

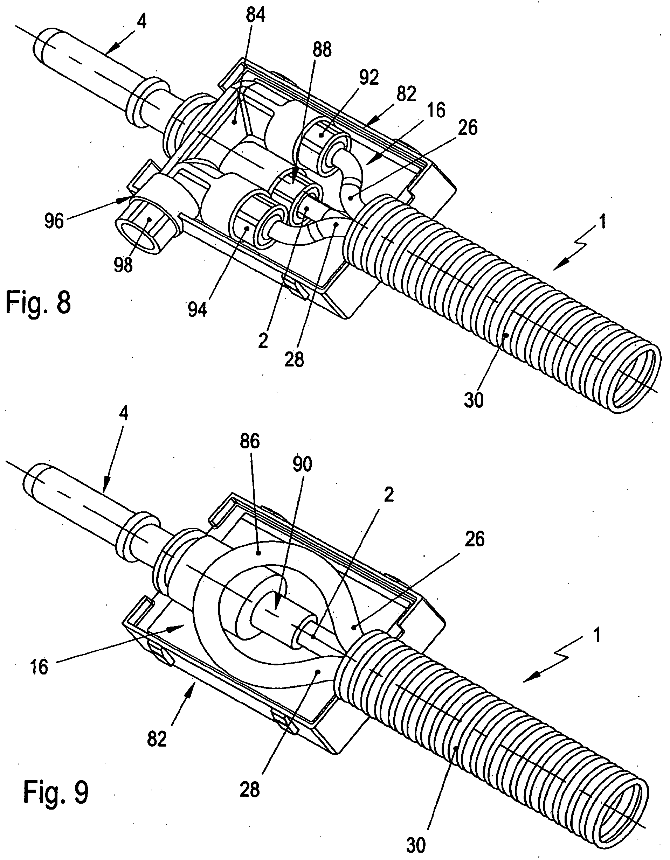

Was noch die Ausführungen gemäß Fig. 8 und 9 betrifft, so weist hierbei der erste Leitungsverbinder 4 der Fluidleitung 2 ein Anschlussgehäuse 82 auf, in dem die zwei Temperierleitungen 26 und 28 über ein zusätzliches Umlenk-Verbinderstück 84 oder durchlaufend über eine Umlenkschlaufe 86 miteinander verbunden sind. Hierbei erfolgt über das Temperierfluid eine Temperierung, insbesondere Kühlung, innerhalb des Anschlussgehäuses 82. Der Leitungsverbinder 4 ist hierbei als Steckerzapfen ausgebildet, der aus dem Anschlussgehäuse 82 hervorragt. Die Fluidleitung 2 ist, mit dem Leitungsverbinder 4 auf geeignete Weise verbunden, beispielsweise gemäß Fig. 8 über einen lösbaren Leitungsanschluss 88 oder gemäß Fig. 9 unlösbar über eine Leitungsaufnahme 90 stoffschlüssig, insbesondere verschweißt. Im Falle der Ausführung gemäß Fig. 8 können auch die Temperierleitungen 26, 28 im Sinne von Fig. 9 unlösbar angeschlossen sein oder wie in Fig. 8 dargestellt über lösbare Leitungsanschlüsse 92, 94. Weiterhin ist in Fig. 8 dargestellt, dass das Umlenk-Verbinderstück 84 einen zusätzlichen Anschluss 96 aufweisen kann, der im Betrieb mit einem Verschluss 98 verschlossen ist. Über den Anschluss 96 kann beispielsweise das Temperiersystem gefüllt und/oder entlüftet werden.

Ergänzend sei noch bemerkt, dass innerhalb der Leitungsumhüllung 30 die einzelnen Leitungen 2, 26, 28 über geeignete, nicht dargestellte Abstandhalter geführt und fixiert sein können. Zudem kann bei Bedarf eine Wärmeisolierung zwischen den einzelnen Leitungen vorgesehen sein oder aber Mittel für einen gewollten, bewussten Wärmeübergang. Insbesondere kann ein direkter Wärmetausch zwischen den beiden Temperierleitungen 26, 28 durch geeignete Mittel vermieden werden. Dagegen ist ein Wärmetausch zwischen der Fluidleitung 2 und mindestens einer der Temperierleitungen 26 und/oder 28 möglich.

Was nun die bevorzugte Verwendung der erfindungsgemäßen Medienleitung 1 betrifft, so wird hierzu nochmals auf Fig. 10 verwiesen. Die erfindungsgemäße Medienleitung 1 verbindet einen Tank T bzw. eine Dosierpumpe P mit der Dosiereinheit D, um in dem SCR-Katalysator-System ein fluidisches Reduktionsadditiv, insbesondere eine wässrige Harnstofflösung, in den Abgasstrang 10 einzudüsen. Bei dieser bevorzugten Verwendung wird als Temperierfluid Kühlflüssigkeit des Verbrennungsmotors M verwendet. Wegen der im Bereich des Abgasstrangs 10 entstehenden hohen Temperatur wird dadurch insbesondere eine Kühlung bewirkt. Dazu ist es besonders zweckmäßig, zur Kühlung die über einen Motorkühler K gekühlte Kühlflüssigkeit aus dem Kühler-Rücklauf zu verwenden und den erfindungsgemäßen Temperiermitteln 16 über die externe Zuführleitung 48 bzw. 22 zuzuführen. Die Kühlflüssigkeit strömt dann bevorzugt durch die Dosiereinheit D und über die Temperierleitung 28 und die Abführleitung 24 zurück in den Motor-Kühlkreislauf. Demnach sind die Temperiermittel 16 an den Kühler-Rücklauf des Motors M angeschlossen. Gemäß Fig. 10 kann die Temperierleitung 28 durchlaufend in die abgezweigte Abführleitung 24 übergehen, es kann aber auch eine Trennstelle bevorzugt als Steckverbindung angesehen sein.

Wie beispielhaft in Fig. 11 dargestellt ist, kann die Temperierleitung 28 auch im Bereich einer Unterteilungsstelle der Fluidleitung 2 zurückgeschleift werden und als zweite Temperierleitung 28a über eine eigentlich beliebige Länge hinweg längs der Fluidleitung 2 verlaufen und dann in die Abführleitung 24 abzweigen. Für dieses Zurückschleifen der Temperierleitung 28, 28a kann ein Leitungsverbinder mit einem Anschlussgehäuse 82a ähnlich einer Ausführung gemäß Fig. 8 oder 9 verwendet werden.

Das in dem Tank T befindliche Fluid kann zusätzlich beheizt werden, und zwar ebenfalls über das Motor-Kühlmittel, wobei hier bevorzugt das über den Motor M erwärmte Kühlmittel aus dem Kühler-Vorlauf durch den Tank T geleitet wird.

Wie noch in den Figuren 6 und 7 veranschaulicht ist, ist die gesamte Länge der Fluidleitung 2 in zwei Abschnitte geteilt. Ein erster, die erfindungsgemäßen Temperiermittel 16 aufweisender Abschnitt ist mit L1 bezeichnet und ein verbleibender zweiter Abschnitt mit L2. Vorzugsweise ist die Teil-Länge L1 deutlich kürzer als die Teil-Länge L2, bei einer Gesamtlänge L = L1 + L2 beträgt L1 bevorzugt 5 % bis 40 % von L. Über die Länge L2 hinweg ist die Fluidleitung 2 mit elektrischen Heizmitteln 8 versehen. Für den praktischen Einsatz wird in aller Regel die Länge L1 im Bereich von 0,2 bis 1,0 m liegen, insbesondere um etwa 0,5 m. Die Länge L2 wird im Bereich von 0,5 bis 10 m, insbesondere bei 3 bis 4 m liegen.

Gemäß Fig. 7 können die Zuführleitung 22 und die Abführleitung 24 auch an unterschiedlichen, über die Länge der Fluidleitung 2 beabstandeten Stellen abgezweigt werden, und zwar je nach Bedarf bzw. je nach baulichen Verhältnissen innerhalb des jeweiligen Fahrzeugs.

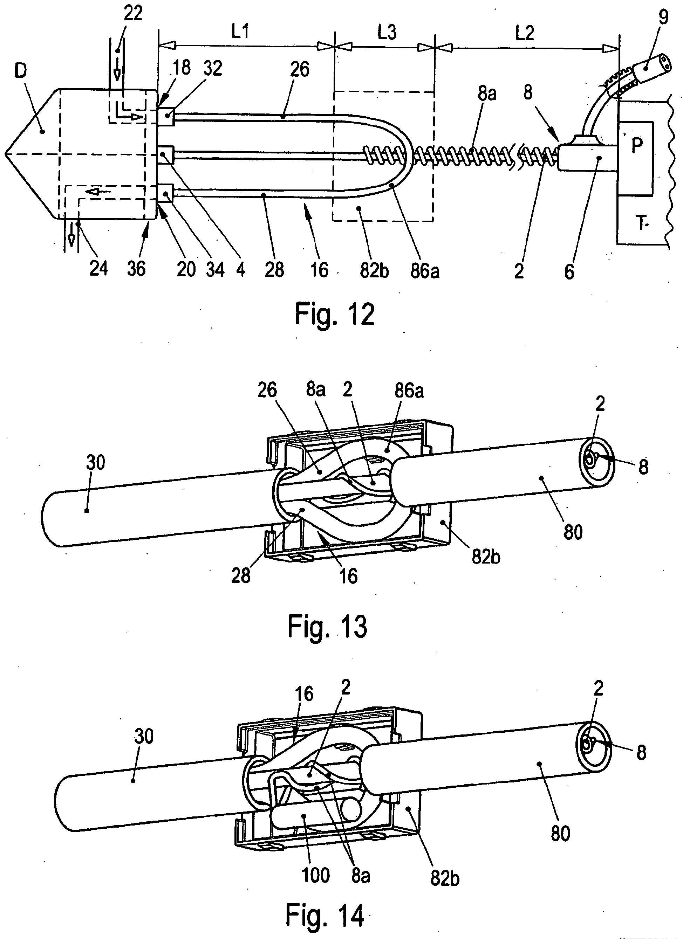

Wie noch in Fig. 12 bis 14 veranschaulicht ist, können die Zuführleitung 22 und die Abführleitung 24 auch an die Dosiereinheit D angeschlossen sein, wobei sie über die als Kanäle durch die Dosiereinheit D verlaufenden Übergänge 18, 20 in die Temperierleitungen 26, 28 übergehen. Somit wird auch bei dieser Ausführung die Dosiereinheit D mit temperiert. Im Bereich der oben erwähnten Unterteilungsstelle der Fluidleitung 2 verlaufen die Leitungen gemäß Fig. 13 und 14 durch ein Leitungsgehäuse 82b, wobei die Temperierleitungen 26, 28 über eine Umlenkschlaufe 86a durchlaufend verbunden sind. Alternativ könnte auch ein Umlenk-Verbinderstück 84 gemäß Fig. 8 vorhanden sein. Von dem Leitungsgehäuse 82b ist nur ein Unterteil dargestellt; ein deckelartiges Oberteil fehlt, um Einblick in das Innere zu gewähren. Innerhalb des Leitungsgehäuses 82b können sich - wie dargestellt - die erfindungsgemäßen Temperiermittel 16 und die elektrischen Heizmittel 8 über eine Länge L3 hinweg überlappen, siehe Fig. 12. Die elektrischen Heizmittel 8 sind auf der Fluidleitung 2, bevorzugt auch im Bereich des Leitungsgehäuses 82b, fixiert, z. B. mittels einer Klebeband-Umwicklung und/oder im Leitungsgehäuse 82b über geeignete Fixierelemente. Bei dieser Ausführung kann die Fluidleitung 2 im Bereich des Leitungsgehäuses 82b über Verbinder, beispielsweise Steckverbinder unterteilt sein (nicht dargestellt) oder durch das Leitungsgehäuse 82b hindurch ohne Unterbrechung durchlaufen. Die Leitungsumhüllungen 30, 80 können endseitig in dem Leitungsgehäuse 82b gehalten sein. Gemäß Fig. 14 kann innerhalb des Leitungsgehäuses 82b mindestens eine Verbindungsstelle 100 für die Heizleiter 8a der elektrischen Heizmittel 8 angeordnet sein, wobei die/jede Verbindungsstelle 100 als Crimpverbinder, vorzugsweise mit einer geeigneten isolierenden Umhüllung, z. B. aus einem Schrumpfklebeschlauch, ausgebildet sein kann. Zudem können mit Vorteil innerhalb des Leitungsgehäuses 82b Mittel zur Fixierung der einzelnen Leitungen 2, 26, 28 und der Umlenkschlaufe 86a vorgesehen sein. Im Übrigen wird auf die bereits beschriebenen Ausführungen und die übereinstimmenden Bezugszeichen verwiesen. Dies gilt besonders auch für die Längenunterteilung L1, L2.

Die erfindungsgemäße Medienleitung 1 ermöglicht durch eine selektive Ansteuerbarkeit der Heiz- und Temperiermittel wahlweise eine Kühl- und/oder Heizfunktion. Abschnittsweise kann ein elektrisches Beheizen mit einem fluidischen Heizen oder Kühlen kombiniert werden. Je nach Betriebszustand wird durch die erfindungsgemäßen Temperiermittel 16 auch ein Beheizen bewirkt. Die Temperiermittel 16 können auch beispielsweise thermostatisch geregelt werden. Über die Zuführleitung 22 (Fig. 1, 3, 6, 7 und 12) bzw. 48 (Fig. 10, 11) kann der Gesamtmassenstrom des Motor-Kühlmittels oder aber nur ein geringerer Teilmassenstrom zugeführt werden. Zudem kann in der Zuführleitung 22 bzw. 48 bei Bedarf eine zusätzliche Pumpe (nicht dargestellt) vorgesehen sein.

## Patentansprüche

1. Konfektionierte Medienleitung (1) zum Durchleiten von fluidischen Medien mit einer Fluidleitung (2) mit endseitigen Leitungsverbindern (4, 6), insbesondere zum Verbinden eines Tanks (T) mit einer Dosiereinheit (D) für ein Reduktionsadditiv in einem SCR-Katalysator-System eines Verbrennungsmotors (M), wobei die Fluidleitung (2) mindestens abschnittsweise elektrische Heizmittel (8) zur Fluidbeheizung aufweist, wobei die Fluidleitung (2) zumindest bereichsweise Temperiermittel (16) zur fluidischen Temperierung der Fluidleitung (2) mittels eines Temperierfluids mit mindestens einem Übergang (18, 20) zu einer externen Zuführleitung (22) und/oder einer externen Abführleitung (24) für das Temperierfluid aufweist, wobei die Temperiermittel (16) von mindestens einer das Temperierfluid führenden Temperierleitung (26 oder 28) gebildet sind, und die/jede Temperierleitung (26, 28) über einen bestimmten Längenabschnitt hinweg benachbart zu der Fluidleitung (2) verläuft, wobei der Wärmetausch zwischen der Fluidleitung (2) und der/jeder Temperierleitung (26, 28) möglich ist, wobei die/jede Temperierleitung (26, 28) in einem ersten Anschlussbereich einen Leitungsverbinder (32, 34) aufweist, wobei der/jeder Leitungsverbinder (32, 34) der Temperierleitung/en (26, 28) gemeinsam mit dem Leitungsverbinder (4) der Fluidleitung (2) als Mehrfachverbinder (36) ausgebildet ist, und wobei die/jede Temperierleitung (26, 28) im Bereich ihres vom ersten Anschlussbereich beabstandeten Übergangs (18, 20) einen Leitungsverbinder (58, 60) zum lösbaren Anschluss der externen Zuführ- oder Abführleitung (22, 24) aufweist, wobei der/jeder sich im Bereich des vom ersten Anschlussbereich beabstandeten Übergangs (18, 20) befindende Leitungsverbinder (58, 60) gemeinsam mit einem die Fluidleitung (2) in zwei Abschnitte unterteilenden Fluidverbinder (62) als Mehrfachverbinder (64) ausgebildet ist und der Mehrfachverbinder (64) elektrische Heizmittel (66) zur Fluidbeheizung aufweist.

2. Medienleitung nach Anspruch 1,
**dadurch gekennzeichnet, dass** die Temperiermittel (16) von zwei einerseits einen Vorlauf und andererseits einen Rücklauf bildenden Temperierleitungen (26 und 28) gebildet sind.

3. Medienleitung nach Anspruch 1 oder 2,
**dadurch gekennzeichnet, dass** die/jede Temperierleitung (26, 28) gemeinsam mit der Fluidleitung (2) von einer Leitungsumhüllung (30) umschlossen ist.

4. Medienleitung nach Anspruch 2 oder 3,
**dadurch gekennzeichnet, dass** der Leitungsverbinder (4) der Fluidleitung (2) ein Anschlussgehäuse (82) aufweist, in dem die zwei Temperierleitungen (26, 28) einteilig durchlaufend oder über ein zusätzliches Verbinderstück (84) miteinander verbunden sind.

5. Medienleitung nach einem der Ansprüche 1 bis 4,
**dadurch gekennzeichnet, dass** der/jeder Leitungsverbinder (32, 34) der Temperierleitung/en (26, 28) gemeinsam mit dem Leitungsverbinder (4) der Fluidleitung (2) als Mehrfachverbinder (36) zur Anschluss-Steckverbindung mit einer Dosiereinheit (D) ausgebildet ist.

6. Medienleitung nach Anspruch 2 oder 3,
**dadurch gekennzeichnet, dass** bei Ausführung mit zwei Temperierleitungen (26, 28) diese über ihre Leitungsverbinder (32, 34) und über einen Verbindungskanal (42) der Dosiereinheit (D) verbunden oder verbindbar sind.

7. Medienleitung nach Anspruch 1,
**dadurch gekennzeichnet, dass** bei einer Ausführung mit einer Temperierleitung (28) der Mehrfachverbinder (36) einen Anschlussverbinder (46) für eine Zu- oder Abführleitung (48) für das Temperierfluid aufweist, wobei der Leitungsverbinder (34) der Temperierleitung (28) mit dem Anschlussverbinder (46) über einen Verbindungskanal (42a) der Dosiereinheit (D) verbunden oder verbindbar ist.

8. Medienleitung nach einem der Ansprüche 1 bis 7,
**dadurch gekennzeichnet, dass** der Mehrfachverbinder (36) mit der Dosiereinheit (D) verrastet oder verrastbar ist und vorzugsweise elektrische Heizmittel (54) zur Fluidbeheizung aufweist.

9. Medienleitung nach einem der Ansprüche 1 bis 8,
**dadurch gekennzeichnet, dass** die/jede Temperierleitung (26, 28) im Bereich ihres vom ersten Anschlussbereich beabstandeten Übergangs (18, 20) durchlaufend über ein Abzweigstück (74) der Leitungsumhüllung (30) geführt ist.

10. Medienleitung nach einem der Ansprüche 3 bis 9,
**dadurch gekennzeichnet, dass** die Leitungsumhüllung (30) von einem Wellrohr gebildet und mit dem/jedem Mehrfachverbinder (36, 64) und/oder mit dem Abzweigstück (74) formschlüssig verbunden, insbesondere verrastet ist.

11. Medienleitung nach einem der Ansprüche 1 bis 10,
**dadurch gekennzeichnet, dass** die Fluidleitung (2) auch in ihrem die Temperiermittel (16) aufweisenden Bereich elektrische Heizmittel (56) aufweist.

12. Verwendung einer konfektionierten Medienleitung (1) nach einem der vorhergehenden Ansprüche zum Verbinden eines Tanks (T) mit einer Dosiereinheit (D) für ein Reduktionsadditiv in einem SCR-Katalysator-System eines Verbrennungsmotors (M),
**dadurch gekennzeichnet, dass** als Temperierfluid Kühlflüssigkeit des Verbrennungsmotors (M) verwendet wird.

## Claims

1. Made-up media line (1) for conducting fluid media through having a fluid line (2) with end-side line connectors (4, 6), in particular for connecting a tank (T) to a metering unit (D) for a reduction additive in an SCR catalytic converter system of an internal combustion engine (M), the fluid line (2) having electric heating means (8) at least in sections for fluid heating, the fluid line (2) having temperature control means (16) at least in regions for fluid temperature control of the fluid line (2) by means of a temperature control fluid with at least one transition (18, 20) to an external feed line (22) and/or an external discharge line (24) for the temperature control fluid, the temperature control means (16) being formed by at least one temperature control line (26 or 28) which conducts the temperature control fluid, and the/each temperature control line (26, 28) running adjacently with respect to the fluid line (2) over a defined length section, the heat exchange between the fluid line (2) and the/each temperature control line (26, 28) being possible, the/each temperature control line (26, 28) having a line connector (32, 34) in a first connection region, the/each line connector (32, 34) of the temperature line/lines (26, 28) being configured together with the line connector (4) of the fluid line (2) as a multiple connector (36), and the/each temperature control line (26, 28) having a line connector (58, 60) for the releasable connection of the external feed or discharge line (22, 24) in the region of its transition (18, 20) which is spaced apart from the first connection region, the/each line connector (58, 60) which is situated in the region of the transition (18, 20) which is spaced apart from the first connection region being configured together with a fluid connector (62) which divides the fluid line (2) into two sections as a multiple connector (64), and the multiple connector (64) having electric heating means (66) for fluid heating.

2. Media line according to Claim 1, **characterized in that** the temperature control means (16) are formed by two temperature control lines (26 and 28) which form firstly a forward feed line and secondly a return line.

3. Media line according to Claim 1 or 2, **characterized in that** the/each temperature control line (26, 28) is enclosed together with the fluid line (2) by a line sheath (30).

4. Media line according to Claim 2 or 3, **characterized in that** the line connector (4) of the fluid line (2) has a connection housing (82), in which the two temperature control lines (26, 28) are connected to one another such that they run through in one piece or via an additional connector piece (84).

5. Media line according to one of Claims 1 to 4, **characterized in that** the/each line connector (32, 34) of the temperature control line/lines (26, 28) is configured together with the line connector (4) of the fluid line (2) as a multiple connector (36) for the connector plug connection to a metering unit (D).

6. Media line according to Claim 2 or 3, **characterized in that**, in the case of an embodiment with two temperature control lines (26, 28) they are connected or can be connected via their line connectors (32, 34) and via a connecting channel (42) of the metering unit (D).

7. Media line according to Claim 1, **characterized in that**, in the case of an embodiment with one temperature control line (28), the multiple connector (36) has a connection connector (46) for a feed or discharge line (48) for the temperature control fluid, the line connector (34) of the temperature control line (28) being connected or being capable of being connected to the connection connector (46) via a connecting channel (42a) of the metering unit (D).

8. Media line according to one of Claims 1 to 7, **characterized in that** the multiple connector (36) is latched or can be latched to the metering unit (D) and preferably has electric heating means (54) for fluid heating.

9. Media line according to one of Claims 1 to 8, **characterized in that** the/each temperature control line (26, 28) is guided via a branching piece (74) of the line sheath (30) so as to run through in the region of its transition (18, 20) which is spaced apart from the first connection region.

10. Media line according to one of Claims 3 to 9, **characterized in that** the line sheath (30) is formed by a corrugated tube and is connected in a positively locking manner, in particular latched, to the/each multiple connector (36, 64) and/or to the branching piece (74).

11. Media line according to one of Claims 1 to 10, **characterized in that** the fluid line (2) also has electric heating means (56) in its region which has the temperature control means (16).

12. Use of a made-up media line (1) according to one of the preceding claims for connecting a tank (T) to a metering unit (D) for a reduction additive in an SCR catalytic converter system of an internal combustion engine (M), **characterized in that** cooling liquid of the internal combustion engine (M) is used as temperature control fluid.

## Revendications

1. Conduite assemblée pour milieux fluidiques (1) pour faire passer des milieux fluidiques avec une conduite de fluide (2) comportant des connecteurs de conduite (4, 6) aux extrémités, notamment pour relier un réservoir (T) avec une unité de dosage (D) destinée à un additif de réduction dans un système de catalyseur SCR d'un moteur à combustion interne (M), dans laquelle la conduite de fluide (2) présente au moins sur des portions des moyens chauffants électriques (8) pour le chauffage de fluide, dans laquelle la conduite de fluide (2) présente au moins sur des portions un moyen de thermorégulation (16) pour la thermorégulation fluidique de la conduite de fluide (2) au moyen d'un fluide de thermorégulation avec au moins une transition (18, 20) vers une conduite d'alimentation externe (22) et/ou une conduite d'évacuation externe (24) pour le fluide de thermorégulation, dans laquelle le moyen de thermorégulation (16) est formé par au moins une conduite de thermorégulation (26 ou 28)guidant le fluide de thermorégulation, et la/chaque conduite de thermorégulation (26, 28) s'étend sur une portion longitudinale déterminée dans le voisinage de la conduite de fluide (2), dans laquelle l'échange thermique entre la conduite de fluide (2) et la/chaque conduite de thermorégulation (26, 28) est possible, dans laquelle la/chaque conduite de thermorégulation (26, 28) présente dans une première zone de raccordement un connecteur de conduite (32, 34), dans laquelle le/chaque connecteur de conduite (32, 34) de la/ des conduite(s) de thermorégulation (26, 28) est conçu en commun avec le connecteur de conduite (4) de la conduite de fluide (2) comme un connecteur multiple (36), et dans laquelle la/chaque conduite de thermorégulation (26, 28) présente au niveau de sa transition (18, 20) espacée de la première zone de raccordement un connecteur de conduite (58, 60) pour le raccordement amovible de la conduite d'alimentation ou d'évacuation externe (22, 24), dans laquelle le/chaque connecteur de conduite (58, 60) se trouvant au niveau de la transition (18, 20) espacée de la première zone de raccordement est conçu comme connecteur multiple (64) en commun avec un connecteur de fluide (62) divisant la conduite de fluide (2) en deux portions et le connecteur multiple (64) présente des moyens chauffant électrique (66) pour le chauffage du fluide.

2. Conduite pour milieux fluidiques selon la revendication 1, **caractérisée en ce que** le moyen de thermorégulation (16) est formé par deux conduites de thermorégulation (26 et 28) formant d'un côté un départ et d'un autre côté un retour.

3. Conduite pour milieux fluidiques selon la revendication 1 ou 2, **caractérisée en ce que** la/chaque conduite de thermorégulation (26, 28) est entourée en commun avec la conduite de fluide (2) par une gaine de conduite (30).

4. Conduite pour milieux fluidiques selon la revendication 2 ou 3, **caractérisée en ce que** le connecteur de conduite (4) de la conduite de fluide (2) présente un boîtier de raccordement (82), dans lequel les deux conduites de thermorégulation (26, 28) sont reliées en une seule partie continue ou l'une à l'autre par l'intermédiaire d'une pièce de connecteur (84) supplémentaire.

5. Conduite pour milieux fluidiques selon une des revendications 1 à 4, **caractérisée en ce que** le/chaque connecteur de conduite (32, 34) de la/des conduite(s) de thermorégulation (26, 28) est conçu en commun avec le connecteur de conduite (4) de la conduite de fluide (2) comme un connecteur multiple (36) pour une liaison de raccordement par enfichage avec une unité de dosage (D).

6. Conduite pour milieux fluidiques selon la revendication 2 ou 3, **caractérisée en ce que** dans le cas d'un modèle avec deux conduites de thermorégulation (26, 28) celles-ci sont reliées ou peuvent être reliées par l'intermédiaire de leurs connecteurs de conduite (32, 34) et d'un canal de liaison (42) de l'unité de dosage (D).

7. Conduite pour milieux fluidiques selon la revendication 1, **caractérisée en ce que** dans le cas d'un modèle avec une conduite de thermorégulation (28) le connecteur multiple (36) présente un connecteur de raccordement (46) pour une conduite d'alimentation ou d'évacuation (48) pour le fluide de thermorégulation, dans laquelle le connecteur de conduite (34) de la conduite de thermorégulation (28) est relié ou peut être relié avec le connecteur de raccordement (46) par l'intermédiaire d'un canal de liaison (42a) de l'unité de dosage (D).

8. Conduite pour milieux fluidiques selon une des revendications 1 à 7, **caractérisée en ce que** le connecteur multiple (36) est verrouillé ou peut être verrouillé avec l'unité de dosage (D) et présente de préférence des moyens chauffant électrique (54) pour le chauffage de fluide.

9. Conduite pour milieux fluidiques selon une des revendications 1 à 8, **caractérisée en ce que** la/chaque conduite de thermorégulation (26, 28) est guidée au niveau de sa transition (18, 20) espacée de la première zone de raccordement de manière continue par l'intermédiaire d'une pièce de ramification (74) de la gaine de conduite (30).

10. Conduite pour milieux fluidiques selon une des revendications 3 à 9, **caractérisée en ce que** la gaine de conduite (30) est formée par un tuyau ondulé et est reliée par conjonction de forme, notamment est verrouillée avec le/chaque connecteur multiple (36, 34) et/ou avec la pièce de ramification (74).

11. Conduite pour milieux fluidiques selon une des revendications 1 à 10, **caractérisée en ce que** la conduite de fluide (2) présente aussi dans sa zone présentant le moyen de thermorégulation (16) des moyens chauffant électrique (56).

12. Utilisation d'une conduite assemblée pour milieux fluidiques (1) selon une des revendications précédentes pour relier un réservoir (T) avec une unité de dosage (D) pour un additif de réduction dans un système de catalyseur SCR d'un moteur à combustion interne (M), **caractérisée en ce que** comme fluide de thermorégulation un liquide de refroidissement du moteur à combustion interne (M) est employé.
